# EUROPÄISCHE PATENTSCHRIFT

(11) **EP 3 492 787 B1**
(45) Veröffentlichungstag und Bekanntmachung des Hinweises auf die Patenterteilung: **16.03.2022**
(21) Anmeldenummer: 17204455.4
(22) Anmeldetag: 29.11.2017
(51) Int. Cl.: F16K 1/42, B29C 49/42, F16K 31/122, F16K 1/46, F16K 39/02

(54) **VENTILEINHEIT**
VALVE UNIT
UNITÉ DE SOUPAPE

(43) Veröffentlichungstag der Anmeldung: 05.06.2019
(60) Teilanmeldung: 22152951.4
(73) Patentinhaber: Eugen Seitz AG, 8623 Wetzikon (CH)
(72) Erfinder: Ramsperger, Marcel, Dr.-Ing., 8623 Wetzikon (CH); Schmidt, Joachim, 8442 Hettlingen (CH); Elbs, Christian, 9651 Ennetbühl (CH)
(74) Vertreter: Clerc, Natalia

(56) Entgegenhaltungen:
- EP-A1- 2 335 904
- EP-A1- 2 402 143
- EP-A1- 3 009 252
- EP-A1- 3 020 531
- WO-A1-2015/121285
- DE-A1- 3 636 739
- DE-A1-102014 000 814
- DE-B- 1 052 762
- GB-A- 1 550 459
- US-A1- 2009 283 160

## Beschreibung

### TECHNISCHES GEBIET

Die vorliegende Erfindung betrifft eine Ventileinheit zum pneumatischen Schalten in einem Blasformprozess. Die Ventileinheit eignet sich insbesondere zur Verwendung in einer Extrusionsblas- oder einer Streckblasmaschine zur Fertigung von Hohlkörpern aus Kunststoff.

### STAND DER TECHNIK

Für die Herstellung von Kunststoffflaschen, insbesondere von PP oder PET Flaschen (PP = Polypropylen; PET = Polyethylenterephthalat) wird ein Rohling oder ein Vorformling in einer Blasformmaschine, insbesondere einer Extrusionsblas- oder einer Streckblasmaschine, in seine endgültige Form aufgeblasen. Hierfür wird der Rohling mit seinem Flaschenkopf, welcher bereits seine Endform aufweist, in einer Blasform gehalten und mit einem Druckluftsystem verbunden. Durch Einblasen von Druckluft durch den Flaschenkopf wird der Rohling aufgeblasen und in seine endgültige Form gebracht.

Der Blasprozess erfolgt üblicherweise in einem zweistufigen Verfahren, wobei in einer ersten Stufe über ein Vorblasventil Druckluft mit einem Druck von 2 bis 20 bar eingeblasen wird und in einer nachfolgenden zweiten Stufe über ein Hauptblasventil das Endblasen mittels eines Drucks von 15 bis 40 bar erfolgt. Ferner wird üblicherweise ein Entlüftungsventil eingesetzt, um den Druck aus der fertig aufgeblasenen Flasche abzulassen. Auch ein Rekuperierventil ist bekannt, welches zwischen dem Hauptblasventil und dem Entlüftungsventil angeordnet ist, um einen Teil der verwendeten Druckluft zurückzugewinnen.

All diese Ventile müssen für den Prozessablauf angesteuert werden. Wesentlich dabei ist, dass die einzelnen Prozessschritte sehr schnell ablaufen müssen und die Ventile somit möglichst kurze Ansprechzeiten aufweisen müssen. Nur dann ist eine wirtschaftliche Produktion gewährleistet. Zudem ist es wichtig, dass die Ventile eine hohe Anzahl an Schaltzyklen und somit eine hohe Lebensdauer aufweisen.

Bewährt haben sich pneumatisch betätigte Ventile, welche die bereits als Arbeitsmedium zur Verfügung stehende Druckluft verwenden.

EP 1 574 771 A2 beschreibt ein derartiges luftgesteuertes Ventil. Es weist einen in einem Ventilgehäuse verschiebbar angeordneten Schaltkolben, eine Prozessdruck-Eingangsleitung, eine Prozessdruck-Ausgangsleitung und eine Steuerdruckleitung auf. Der Schaltkolben weist eine untere Stirnfläche auf, welche bei geschlossener Stellung des Ventils die Prozessdruck-Eingangsleitung gegenüber der Prozessdruck-Ausgangsleitung abschliesst. Eine gegenüberliegende obere Stirnfläche ist zu einem Ventilraum hin gerichtet. Ein innerhalb des Schaltkolbens verlaufender Kanal verbindet diese zwei Stirnflächen miteinander. Die Wirkfläche der unteren Stirnfläche ist im geschlossenen Zustand des Ventils kleiner als die Wirkfläche der oberen Stirnfläche, so dass der Schaltkolben vom Prozessdruck in seiner geschlossenen Stellung gehalten ist. Der Schaltkolben weist ferner einen radial nach aussen vorstehenden Kolbenring auf, dessen untere Ringfläche als Steuerfläche dient. Er liegt in einem ringförmigen Steuerraum, welcher mit einer Steuerdruckleitung in Verbindung steht. Die obere Ringfläche befindet sich in einem weiteren Raum, welcher Umgebungsdruck ausgesetzt ist. Die Steuerfläche ist grösser als die Differenz der unteren und oberen Wirkfläche im geschlossenen Zustand des Ventils. Wird nun der Steuerraum mit einem Druck beaufschlagt, so wird der Schaltkolben angehoben und das Ventil öffnet sich. Hierfür genügt bereits ein relativ geringer Druck. In einer Ausführungsform weist die untere Stirnfläche einen nach unten ragenden, radial nach innen versetzten Kragen auf, welcher dank der verkleinerten Auflagefläche auf dem Ventilgehäuse eine verbesserte Dichtwirkung erzielen soll.

EP 2 142 830 B1 offenbart ebenfalls ein luftgesteuertes Ventil. Hier sind nun zwei einander gegenüberliegende Steuerflächen vorhanden, wobei sich der untere erste Steuerraum mittels eines Pilotventils wahlweise einem konstanten Druck oder dem Umgebungsdruck aussetzen lässt und der obere zweite Steuerraum permanent einem konstanten Druck ausgesetzt ist. Die erste Steuerfläche ist kleiner als die zweite Steuerfläche, so dass bei Anlegen des konstanten Drucks in der zweiten Steuerkammer eine Differenzkraft zwischen der ersten und zweiten Steuerkammer entsteht und der Schaltkolben angehoben wird. Am Steuerkolben ist eine Ventildichtung angeordnet, welche an ihrem Umfang einen umlaufenden nach unten ragenden Kragen aufweist. Dieser Kragen bildet eine Schliessfläche, welche mit einem Ventilsitz des Ventilgehäuses zusammenwirkt. Da bei Anhebung des Schaltkolbens, d.h. beim Öffnen des Ventils, die erste und zweite Wirkfläche annähernd gleich gross werden, ist lediglich ein kleiner Kraftaufwand für eine schnelle und vollständige Öffnung des Ventils notwendig. Vorteilhaft ist ferner, dass sich das Ventil auch steuern lässt, wenn die zwei Ventilräume dasselbe Druckniveau aufweisen. Dieses Ventil zeichnet sich durch eine schnelle Ansprechzeit und somit ein schnelles Öffnen praktisch unabhängig von der Höhe des Prozessdrucks aus. Diese Ventileinheit benötigt jedoch nach wie vor relativ hohe axiale Dichtkräfte im Bereich von 1000 N und somit ein Pilotventil mit einer entsprechend grossen Nennweite.

WO 2015/121285 A1 zeigt ein luftgesteuertes Ventil mit zwei Pilotventilen, welche unabhängig voneinander den Druck in den zwei Steuerräumen kontrollieren.

Derartige Prozessventile benötigen hohe Dichtkräfte von bis zu 1200 N, um die Leckage-Grenzwerte im Betriebszustand von 0 bis 40 bar einzuhalten. Pilotgesteuerte Ventileinheiten, d.h. Ventileinheiten, welche wie oben beschrieben mindestens einen mit einem Pilotventil verbundenen Steuerraum aufweisen, benötigen hierzu relativ grosse Steuerflächen. Dies führt zu grossen Steuervolumina, was wiederum der Forderung nach schnell schaltenden Ventilen widerspricht, da die grossen Steuervolumina genügend schnell gefüllt und wieder entleert werden müssen. Um eine genügend schnelle Befüllung und Entleerung zu gewährleisten, werden deshalb die Pilotventile mit relativ grossen Nennweiten verwendet, welche jedoch wiederum langsamer schalten als Pilotventile mit kleinerer Nennweite. Sie sind zudem teurer und benötigen mehr Platz. Die auftretenden hohen Dicht- und Beschleunigungskräfte limitieren die Schaltzeit und minimieren zudem die Anzahl der Schaltzyklen und auch die Lebensdauer der Ventileinheit. Grundsätzlich gilt: je höher die Dichtkräfte und die kinetischen Energien in der Ventileinheit sind, desto geringer wird die zu erreichende Anzahl der Schaltzyklen und die Lebensdauer der Ventileinheit.

EP 2 402 142 A1 offenbart eine Ventileinheit mit ringförmigen Steuerräumen und hohlem Schaltkolben. EP3009252A1 offenbart ebenfalls eine Ventileinheit nach dem Stand der Technik.

### DARSTELLUNG DER ERFINDUNG

Es ist deshalb eine Aufgabe der Erfindung, eine Ventileinheit zu schaffen, welche die axialen Dichtkräfte auf ein Minimum reduziert und somit die Lebensdauer der Ventileinheit erhöht.

Diese Aufgabe löst eine Ventileinheit mit den Merkmalen des Patentanspruchs 1.

Die erfindungsgemässe Ventileinheit weist ein Ventilgehäuse auf, welches eine Prozessdruck-Eingangsleitung, eine Prozessdruck-Ausgangsleitung sowie einen Prozessführungsschaft aufweist. Sie weist ferner einen Schaltkolben zum Verschliessen und Öffnen einer Verbindung zwischen der Prozessdruck-Eingangsleitung und der Prozessdruck-Ausgangsleitung auf, wobei der Schaltkolben eine Längsmittelachse definiert. Ferner umfasst die Ventileinheit eine erste und eine zweite Steuerleitung und einen ersten und einen zweiten Steuerraum zur Steuerung des Schaltkolbens, wobei der Schaltkolben mittels einer dynamischen Prozessdichtung gedichtet in axialer Richtung innerhalb des Prozessführungsschaftes verschiebbar ist. Der Schaltkolben weist einen Schliessring auf, welcher im geschlossenen Zustand der Verbindung dichtend an einem Ventilsitz des Ventilgehäuses anliegt. Alternativ zu diesem Merkmal kann das Ventilgehäuse einen Schliessring aufweisen, welcher im geschlossenen Zustand der Verbindung dichtend an einem Ventilsitz des Schaltkolbens anliegt. Erfindungsgemäss ist der Schliessring als umlaufende Dichtungskante ausgebildet, wobei der Ventilsitz aus einem weicheren und elastischeren Material als die daran anliegende Dichtungskante besteht, und die umlaufende Dichtungskante weist einen Durchmesser auf, welcher einem Führungsdurchmesser der dynamischen Prozessdichtung entspricht.

Die dynamische Prozessdichtung ist hier definiert als diejenige dynamische Dichtung, welche den Schaltkolben gegenüber dem Ventilraum, also dem mit Prozessdruck zwischen Ein- und Ausgang beaufschlagten Raum der Ventileinheit, dichtet.

Die Dichtungskante ist möglichst schmal mit geringer Auflagefläche ausgebildet. Vorzugsweise ist sie annähernd linienförmig.

Die oben gewählte Formulierung beinhaltet, dass die erfindungsgemässe Ventileinheit auch mehr als zwei Steuerleitungen und Steuerräume aufweisen kann. Vorzugsweise sind jedoch genau zwei Steuerleitungen und zwei Steuerräume vorhanden.

Die erfindungsgemässe luftgesteuerte Ventileinheit weist eine minimierte Dichtungsfläche auf, so dass bei geringer axialer Kraft eine hohe Flächenpressung erzeugt werden kann. Es lässt sich insbesondere ein Prozessdruck von 40 bar in beiden Richtungen, also bidirektional, abdichten. Die gewählte Materialpaarung von weich und hart der zwei Dichtungspartner gleichen allenfalls auftretende Unebenheiten aus, so dass die Dichtung gewährleistet ist.

Die Verwendung von identischen Dichtdurchmessern von Sitzdichtung und benachbarter dynamischer Prozessdichtung verhindert zudem, dass prozessdruckabhängige Kräfte in Bewegungsrichtung auf den bewegten Schaltkolben generiert werden.

Vorzugsweise weist der Schaltkolben eine Dichtungskrone auf, welche keilförmig ausgebildet ist und deren umlaufende Spitze die Dichtungskante bildet. Die keilförmige Ausbildung führt zu einer optimalen Krafteinleitung auf die Dichtungskante und dient auch dazu, der eingespiesenen Druckluft beim Öffnen des Ventils einen optimalen Durchflussweg zu schaffen.

In einer bevorzugten Ausführungsform ist der Ventilsitz in einer Ventilsitzringanordnung eingebettet, wobei die Ventilsitzringanordnung aus einem härteren Material besteht als der Ventilsitz. Die Einbettung gewährleistet, dass der Ventilsitz durch die auftretenden Kräfte nicht seitlich ausweichen kann. Ein derartiges Ausweichen könnte die Dichtleistung beeinträchtigen.

Vorzugsweise ist ein ringförmiges Dichtelement vorhanden, welches den Ventilsitz bildet, wobei das Dichtelement die Form eines Kegelstumpfes mit einer sich nach aussen erweiternden Basis aufweist. Dadurch lässt sich das Dichtelement optimal fixieren, um auch grossen Kräften standzuhalten. Das Dichtelement bildet zudem einen Puffer.

In bevorzugten Ausführungsformen sind eine erste Wirkfläche und eine zweite Wirkfläche vorhanden, welche einander entgegenwirken und welche mit einem Prozessdruck beaufschlagbar sind. Die erste und die zweite Wirkfläche sind gleich gross. Dadurch lässt sich der Schaltkolben prozessdruckunabhängig steuern.

Jeder der Steuerräume ist über eine Pilotbohrung mit einem Pilotventil verbunden. Vorzugsweise werden hierzu 3/2 Wege-Ventile verwendet. Es lassen sich Pilotventile mit relativ geringen Nennweiten verwenden. Typische Nennweiten sind ca. 1 mm.

Der Schaltkolben der erfindungsgemässen Ventileinheit weist eine erste Steuerfläche auf, welche dem ersten Steuerraum zugewandt ist, und eine zweite Steuerfläche, welche dem zweiten Steuerraum zugewandt ist. Diese zwei Steuerflächen sind mit je einem Pilotdruck beaufschlagbar. Sie sind vorzugsweise gleich gross. Dies hat den Vorteil, dass die Öffnungs- und Schliesskräfte gleich gross sind.

Mindestens einer der zwei Steuerräume der erfindungsgemässen Ventileinheit ist, vorzugsweise sind beide Steuerräume, zylindrisch ausgebildet und zentrisch zur Längsmittelachse des Schaltkolbens angeordnet. Diese Anordnung ermöglicht die Ausbildung von relativ kleinen Steuerräumen und die Verwendung von relativ kleinen Steuerflächen. Dadurch lassen sich die Steuerräume schnell befüllen und entleeren. Die Ventileinheit lässt sich somit relativ schnell schalten. Da die angewandten Kräfte durch die Minimierung der Steuerräume relativ klein sind, ist auch die Lebensdauer der Ventileinheit erhöht.

In bevorzugten Ausführungsformen sind eine erste und eine zweite dynamische Steuerraumdichtung vorhanden, wobei die Führungsdurchmesser dieser zwei dynamischen Steuerraumdichtungen gleich gross sind und zentrisch bezüglich der Längsmittelachse des Schaltkolbens angeordnet sind.

Vorzugsweise ist der Führungsdurchmesser der dynamischen Prozessdichtung grösser als mindestens einer der Führungsdurchmesser der ersten und zweiten Steuerraumdichtung. Noch bevorzugter ist er grösser als beide Führungsdurchmesser der ersten und zweiten Steuerraumdichtung. Diese Anordnung vermindert das Volumen der Steuerräume.

Die erfindungsgemässe Lehre lässt sich mit unterschiedlich geformten Schaltkolben umsetzen. Nachfolgend sind drei bevorzugte Varianten erwähnt. In einer ersten Variante weist der Schaltkolben einen Kolbenfuss, einen Kolbenkopf und einen Kolbenring auf, wobei der Kolbenring einen grösseren Aussendurchmesser aufweist als der Kolbenfuss und der Kolbenkopf. Der Kolbenfuss und der Kolbenkopf weisen denselben Aussendurchmesser auf. Das Ventilgehäuse weist eine erste zylindrische zentrische Sackbohrung zur Aufnahme des Kolbenfusses und eine zweite zylindrische zentrische Sackbohrung zur Aufnahme des Kolbenkopfes auf. Der erste Steuerraum ist in der ersten Sackbohrung ausgebildet und der zweite Steuerraum ist in der zweiten Sackbohrung ausgebildet ist. Die umlaufende Dichtungskante ist am Kolbenring ausgebildet.

In einer zweiten Variante weist der Schaltkolben einen Grundkörper mit einem H-förmigen Längsschnitt und einen Kolbenring auf, wobei der Grundkörper eine nach unten offene erste Aufnahme und eine nach oben offene zweite Aufnahme bildet. Am Ventilgehäuse sind ein ortsfestes Fusselement und ein ortsfestes Kopfelement ausgebildet, wobei das Fusselement in die erste Aufnahme eingreift und das Kopfelement in die zweite Aufnahme eingreift. Die erste Aufnahme bildet den ersten Steuerraum und die zweite Aufnahme bildet den zweiten Steuerraum. Die umlaufende Dichtkante ist wiederum am Kolbenring ausgebildet. Dieser Schaltkolben weist eine geringere Masse auf als der Schaltkolben der ersten Variante. Zudem weist er eine sehr geringe Längsausdehnung auf.

In einer dritten Variante weist der Schaltkolben einen Grundkörper mit einem U-förmigen Längsschnitt und einen Kolbenring auf, wobei der Grundkörper eine nach oben offene erste Aufnahme bildet. Am Ventilgehäuse ist ein ortsfestes Fusselement ausgebildet, wobei das Fusselement in die erste Aufnahme eingreift. Die erste Aufnahme bildet den ersten Steuerraum. Das Ventilgehäuse weist einen Ringspalt um den Kolbenring auf, wobei der Ringspalt den zweiten Steuerraum bildet. Die umlaufende Dichtkante ist wiederum am Kolbenring ausgebildet. Auch dieser Schaltkolben ist sehr kompakt und kurz ausgebildet. Zudem lässt sich die Ventileinheit dank des ringförmigen zweiten Steuerraums insgesamt sehr kompakt und kurz ausbilden.

Der Schaltkolben ist vorzugsweise massiv, d.h. ohne Kernbohrung, ausgebildet.

Der Schaltkolben weist jedoch Durchgangsbohrungen zur Verbindung des Ventilraums mit einer Druckausgleichskammer auf.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: einen Längsschnitt durch eine erfindungsgemässe Ventileinheit in einer ersten Ausführungsform in geschlossener Ventilstellung;
- Figur 2: die Ventileinheit gemäss Figur 1 in geöffneter Ventilstellung;
- Figur 3: einen Längsschnitt durch eine erfindungsgemässe Ventileinheit in einer zweiten Ausführungsform in geschlossener Ventilstellung;
- Figur 4: die Ventileinheit gemäss Figur 3 in geöffneter Ventilstellung;
- Figur 5: einen Längsschnitt durch eine erfindungsgemässe Ventileinheit in einer dritten Ausführungsform in geschlossener Ventilstellung und
- Figur 6: die Ventileinheit gemäss Figur 5 in geöffneter Ventilstellung.

Gleiche Teile sind mit denselben Bezugszeichen versehen.

### BESCHREIBUNG BEVORZUGTER AUSFÜHRUNGSFORMEN

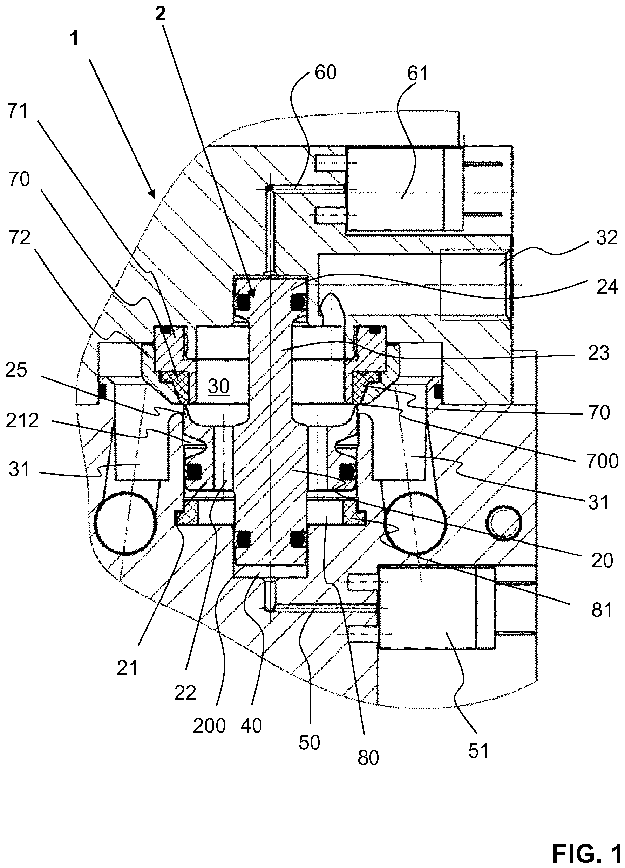

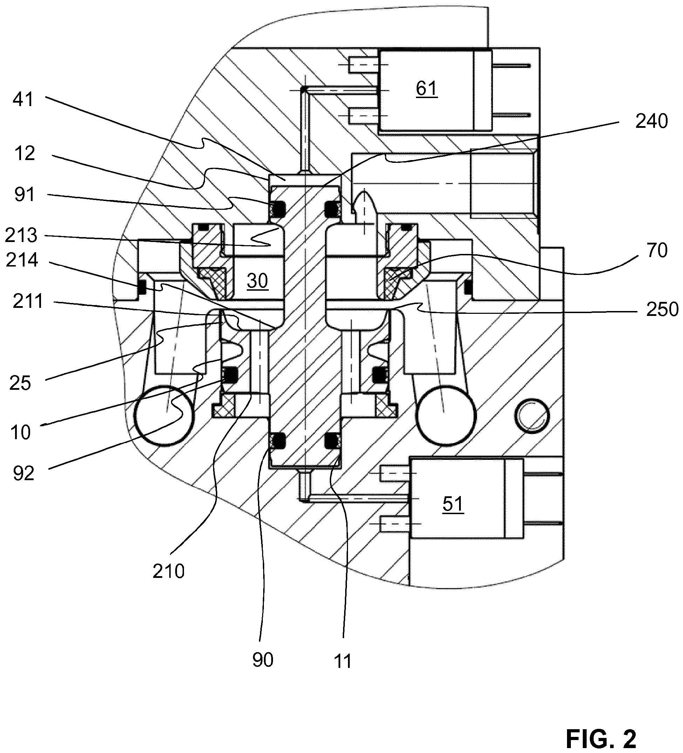

In den Figuren 1 und 2 ist eine erste Ausführungsform einer erfindungsgemässen Ventileinheit dargestellt. Sie weist ein Ventilgehäuse 1 auf, welches vorzugsweise zwei- oder mehrteilig ausgebildet ist. Es kann insbesondere Einsätze umfassen. Das Gehäuse 1 ist vorzugsweise aus Metall oder einem steifen Kunststoff gefertigt.

Das Gehäuse 1 weist im Innern einen im Wesentlichen rotationssymmetrischen Hohlraum mit in axialer Richtung unterschiedlichen inneren Durchmessern auf. Ein Teil dieses Hohlraumes ist als rotationssymmetrischer Ventilraum 30 ausgebildet, in welchen mindestens eine Prozessdruck-Eingangsleitung 31 hinein- und eine Prozessdruck-Ausgangsleitung 32 hinaus führt. Die Prozessdruck-Eingangsleitung 31 ist vorzugsweise ringförmig ausgebildet, wie dies in den Figuren 1 und 2 erkennbar ist. Andere Formen sind möglich.

Die Prozessdruck-Eingangsleitung 31 ist mit einer nicht dargestellten Druckluftquelle verbindbar. Die Prozessdruck-Ausgangsleitung 32 ist mit einer ebenfalls nicht dargestellten Blaseinheit verbindbar. Beispiele einer derartigen Blaseinheit sind eine Blasform und ein Blasträger zur Halterung eines Rohlings einer Kunststoffflasche.

Im Hohlraum ist ein Schaltkolben 2 angeordnet, welcher innerhalb des Hohlraums bewegbar ist und welcher durch diese Bewegung eine Verbindung zwischen der Prozessdruck-Eingangsleitung 31 und der Prozessdruck-Ausgangsleitung 32 öffnet und wieder schliesst. Der Schaltkolben ist vorzugsweise aus einem steifen Kunststoff oder einem Metall, insbesondere aus einem beschichteten Metall, gefertigt.

Mindestens ein Pilotventil steuert die Bewegung des Schaltkolbens 2 innerhalb des Ventilgehäuses 1. Hier ist ein erstes Pilotventil 51 vorhanden, welches über eine erste Pilotleitung, hier erste Steuerleitung oder erste Pilotbohrung 50 genannt, mit dem Hohlraum des Ventilgehäuses 1, genauer mit einem ersten Steuerraum 40, verbunden ist. Ferner ist ein zweites Pilotventil 61 vorhanden, welches über eine zweite Pilotleitung, hier zweite Steuerleitung oder weite Pilotbohrung 60 genannt, ebenfalls mit dem Hohlraum des Ventilgehäuses 1, genauer mit einem zweiten Steuerraum 41, verbunden ist. Die Pilotventile 51, 61 sind vorzugsweise 3/2 Wege-Ventile. Alternativ kann anstelle von zwei 3/2 Wege-Ventilen auch ein gemeinsames 5/2 Wege-Ventil verwendet werden..

Der Schaltkolben 2 ist vorzugsweise einstückig ausgebildet. Er weist im Wesentlichen einen Kolbenfuss 20, einen daran angeordneten, radial nach aussen ragenden Kolbenring 21 mit radial verlaufenden, durchgehenden Druckausgleichsbohrungen 22, einen am Kolbenfuss 20 anschliessenden Kolbenhals 23 und einen daran angrenzenden Kolbenkopf 24 auf. Der Schaltkolben 2 ist vorzugsweise in all diesen Bereichen, vorzugsweise gesamthaft, rotationssymmetrisch ausgebildet.

Der Hohlraum des Ventilgehäuses 1 verjüngt sich in je einer Stufe zum Kolbenfuss 20 und zum Kolbenkopf 24 hin. Es ist eine erste und eine zweite zentrische Sackbohrung ausgebildet, welche je einen hohlzylinderförmigen unteren und oberen Führungsschaft mit demselben Durchmesser bilden. Diese Führungsschäfte sind nachfolgend als oberer und unterer Steuerungsführungsschaft 11, 12 bezeichnet.

Der Kolbenfuss 20 weist eine dem ersten Steuerraum 40 zugewandte, untere erste Stirnfläche 200 auf. Der Kolbenkopf 24 weist zudem eine dem zweiten Steuerraum 41 zugewandte, obere zweite Stirnfläche 240 auf. Die zwei Stirnflächen 200, 240 bilden eine erste und eine zweite Steuerfläche, auf welche der erste bzw. der zweite Steuerdruck der Pilotventile 51, 61 wirkt. Der Steuerdruck wird auch Pilotdruck genannt. Sie sind vorzugsweise gleich gross ausgebildet. Die zwei Steuerflächen sind beide vorzugsweise rotationssymmetrisch ausgebildet und sie sind vorzugsweise beide konzentrisch zur Längsmittelachse des Schaltkolbens angeordnet.

Der Kolbenfuss 20 und der Kolbenkopf 24 weisen an ihrem Umfang umlaufende erste und zweite Dichtungsringe 90, 91 auf, welche dichtend an den inneren Oberflächen der Steuerungsführungsschäfte 11, 12 anliegen und welche bei Bewegung des Schaltkolbens 2 je eine untere und eine obere dynamische Steuerraumdichtung bilden. Die Dichtungsringe 90, 91 sind vorzugsweise aus einem geeigneten weichen und elastischen Material, vorzugsweise aus einem Kunststoff, gebildet. Die Führungsdurchmesser dieser zwei dynamischen Steuerraumdichtungen sind vorzugsweise gleich gross. Sie sind zentrisch angeordnet.

Der Hohlraum bildet einen weiteren Führungsschaft, welcher nachfolgend Prozessführungsschaft 10 genannt ist. Der Kolbenring 21 weist einen umlaufenden dritten Dichtungsring 92 auf, welcher dichtend an der inneren Oberfläche des Prozessführungsschaftes 10 anliegt und welcher bei Bewegung des Schaltkolbens 2 eine weitere dynamische Prozessdichtung bildet. Der Kolbenring 21 weist an seinem äusseren Mantel eine umlaufende Ringnut 212 auf, welche das Volumen und somit das Gewicht des Schaltkolbens 2 minimiert.

Der Kolbenring 21 weist eine nach unten gerichtete ringförmige dritte Stirnfläche 210 auf, welche Teil einer ersten Wirkfläche der Ventileinheit bildet, auf welche der Prozessdruck wirkt. Diese dritte Stirnfläche 210 ist vorzugsweise eben ausgebildet. Der Hohlraum bildet in diesem Bereich eine Druckausgleichskammer 80 aus, welche aufgrund eines darin angeordneten ringförmigen Anschlagelements 81 auch in der Offenstellung des Schaltkolbens 2 ein minimales Volumen beibehält. Das Anschlagelement 81 ist vorzugsweise weich und/oder flexibel ausgebildet und dient gleichzeitig als Dämpfungselement. Es weist vorzugsweise einen L-förmigen Längsschnitt auf und ist in einer entsprechend geformten Aufnahme des Ventilgehäuses 1 lagefixiert gehalten.

Der Kolbenring 21 weist eine nach oben gerichtete ringförmige vierte Stirnfläche 211 auf, welche dem Ventilraum 30 zugewandt ist. Sie bildet Teil einer zweiten Wirkfläche, auf welche der Prozessdruck wirkt und welche der ersten Wirkfläche entgegen wirkt. Weitere einander entgegengesetzte Flächen, welche ebenfalls Wirkflächen bilden weisen die Bezugszeichen 213 und 214 auf. Die Flächen 210 und 213 bilden eine erste Wirkfläche, die Flächen 211 und 214 eine zweite Wirkfläche, welche der ersten Wirkfläche entgegen gesetzt ist.

Die Druckausgleichsbohrungen 22 verbinden diese vierte Stirnfläche 211 mit der dritten Stirnfläche 210 und gewährleisten den Druckausgleich. Die druckwirksamen Flächen kompensieren sich, so dass das Ventil möglichst druckunabhängig schliesst.

Die vierte Stirnfläche 211 ist in diesem Beispiel topfförmig ausgebildet und somit gekrümmt. Sie geht nach aussen in einen zum Kolbenkopf 24 hin gerichteten erhöhten Rand über. Der Kolbenring 21 weist somit eine Dichtungskrone 25 auf. Diese Krone 25 weist einen äusseren Mantel auf, welcher eine geradlinige, d.h. eine bündige, Verlängerung des restlichen Mantels des zylinderförmigen Kolbenrings 21 bildet.

Die Spitze der Dichtungskrone 25 ist als umlaufende Dichtungskante 250 ausgebildet, welche eine minimierte Materialdicke aufweist. Der innere Umfang der Krone 25 verläuft schräg, so dass die Materialdicke von der Dichtungskante 250 zum Kolbenring 21 hin zunimmt. Die Dichtungskrone ist somit auf ihrem inneren Umfang keilförmig ausgebildet. Diese umlaufende Dichtungskante 250 mit minimierter Stirnfläche bildet einen Schliessring, welcher in geschlossener Ventilstellung eine statische Dichtung zwischen Schaltkolben 2 und Ventilgehäuse 1 bildet und somit die Verbindung zwischen der Prozessdruck-Eingangsleitung 31 und der Prozessdruck-Ausgangsleitung 32 unterbricht.

Die Dichtungskante 250 weist einen Dichtdurchmesser auf, welcher dem Führungsdurchmesser der dynamischen Prozessdichtung entspricht. Zudem sind beide zentrisch angeordnet. Dies verhindert, dass in Bewegungsrichtung auf den Schaltkolben wirkende prozessdruckabhängige Kräfte generiert werden.

Vorzugsweise ist der Führungsdurchmesser der zwei dynamischen Steuerraumdichtungen kleiner als der Führungsdurchmesser der dynamischen Prozessdichtung, d.h. sie liegen, wie in den Figuren 1 und 2 gut erkennbar ist, näher bei der Längsmittelachse des Schaltkolbens 2. Vorzugsweise befindet sich die dynamische Prozessdichtung in axialer Richtung zwischen der ersten und der zweiten dynamischen Steuerraumdichtung, wie dies ebenfalls in den Figuren 1 und 2 gut erkennbar ist. Dadurch ist der Schaltkolben 2 während seiner Bewegung optimal geführt.

Das Ventilgehäuse 1 weist hierfür einen entsprechenden Ventilsitz auf, welcher als Einsatzelement des Ventilgehäuses 1 ausgebildet ist und somit in diesem Text als Bestandteil des Ventilgehäuses 1 verstanden wird. Der Ventilsitz weist eine Ventilsitzringanordnung mit einem inneren Ventilsitzring 71 und einem äusseren Ventilsitzring 72 auf, welche vorzugsweise über einen Passsitz miteinander verbunden sind. Die zwei Ventilsitzringe 71, 72 sind vorzugsweise aus Metall oder einem steifen Kunststoff gefertigt. Zwischen diesen zwei Ventilsitzringen 71, 72 ist ein ringförmiges Dichtelement 70 gehalten. Dieses ist vorzugsweise aus einem weichen und/oder flexiblen Material gefertigt. Vorzugsweise besteht es aus Kunststoff.

Das Dichtelement 70 weist vorzugsweise eine planparallele Basis auf, welche über eine horizontale Stufe in einen sich konisch verjüngenden Kegelstumpf übergeht. Die Basis ist zwischen den zwei Ventilsitzringen 71, 72 eingeklemmt. Das freie Ende des Kegelstumpfes liegt frei zugänglich zwischen den zwei Ventilsitzringen 71, 72 und bildet einen Ventilsitz 700 oder eine Sitzfläche, d.h. den wirksamen Ventilsitz zur dichtenden Anlage der Dichtungskante 250.

Da die Dichtungskante 250 aus einem härteren Material als der Ventilsitz 700 besteht, ist eine optimale Dichtung erreicht, welche auch bei geringen Dichtkräften einem hohen Druck innerhalb des Hohlraums bzw. der Prozessdruck-Eingangsleitung 31 standhält. Z.B. genügt eine Dichtkraft von 150 N, um einem Druck von 40 bar standzuhalten. Es lassen sich somit Pilotventile mit relativ geringer Nennweite verwenden.

In der Zusammenschau der Figuren 1 und 2 lässt sich nun die Unterteilung des Hohlraums in diverse Räume und die Wirkungsweise der Ventileinheit erkennen.

In Figur 1 befindet sich der Schaltkolben 2 in der Schliessstellung des Ventils. Die Dichtungskante 250 drückt gegen den Ventilsitz 700. Der Zugang der Prozessdruck-Eingangsleitung 31 in den Ventilraum 30 ist ringförmig verschlossen. Das erste Pilotventil 51 hat den ersten Steuerraum 40 mit einem Druck beaufschlagt und das zweite Pilotventil 61 hat den zweiten Steuerraum 41 auf Umgebungsdruck geschalten, so dass der Schaltkolben 2 in den zweiten Steuerraum 41 hinein bewegt wurde und dessen Volumen minimiert.

Zum Öffnen des Ventils wird nun über das zweite Pilotventil 61 ein Druck im zweiten Steuerraum 41 angelegt. Ist dieser Druck grösser als der Druck des ersten Steuerraums 40 bzw. wird dort der Druck reduziert, so wird der Schaltkolben 2 nach unten geschoben. Dadurch entfernt sich die Dichtungskante 250 vom Ventilsitz 700 und der Zugang in den Ventilraum 30 wird freigegeben. Druckluft zum Aufblasen der Kunststoffflaschen kann durch die Prozessdruck-Eingangsleitung 31 in den Ventilraum 30 und von dort durch die Prozessdruck-Ausgangsleitung 32 zum Rohling gelangen.

Zum erneuten Schliessen des Ventils wird nun wiederum der erste Steuerraum 40 mit einem Druck beaufschlagt und der Druck im zweiten Steuerraum 41 bis auf Umgebungsdruck reduziert, so dass sich der Schaltkolben 2 wieder in Richtung des zweiten Steuerraums 41 bewegt.

Vorzugsweise wird somit der erste Steuerraum 40 mit Druckluft befüllt und der zweite Steuerraum 41 entleert, um das Ventil zu schliessen. Beim Öffnen des Ventils wird der erste Steuerraum 40 entleert und der zweite Steuerraum 41 befüllt.

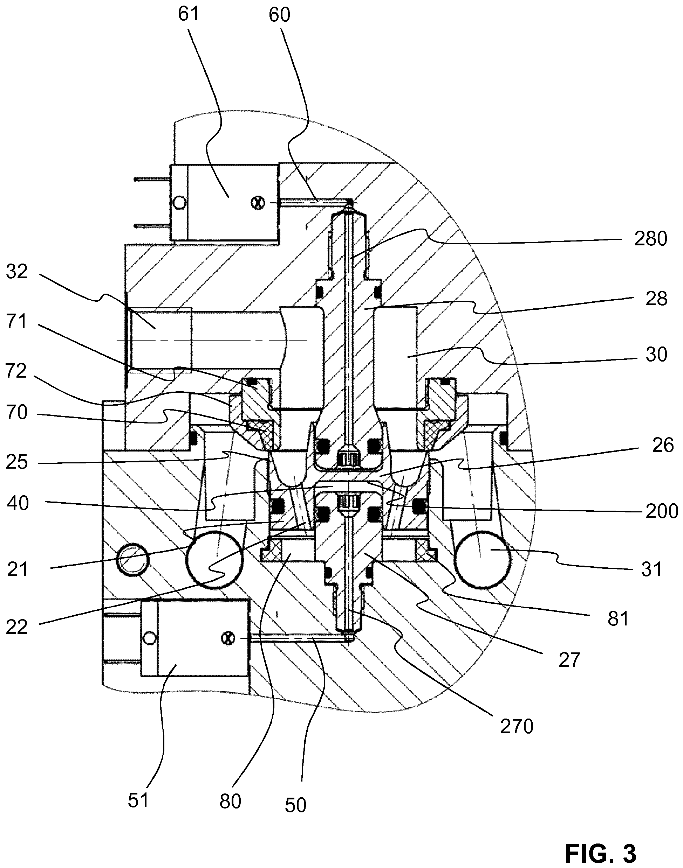

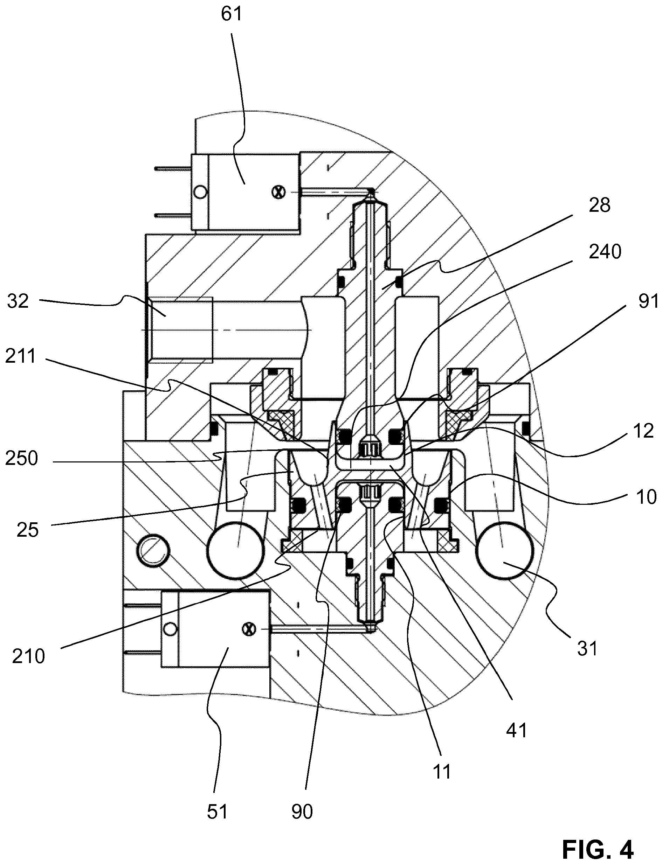

In den Figuren 3 und 4 ist ein zweites Ausführungsbeispiel der erfindungsgemässen Ventileinheit dargestellt. Gleiche Teile sind mit gleichen Bezugszeichen versehen und werden hier nicht nochmals im Detail erläutert. Die Ventileinheit weist wiederum das Ventilgehäuse 1 auf, welches einen Hohlraum ausbildet. In den Hohlraum, genauer in den Ventilraum 30, mündet die Prozessdruck-Eingangsleitung 31. Die Prozessdruck-Ausgangsleitung 32 führt aus diesem heraus. Der Ventilraum 30 ist über mehrere Druckausgleichsbohrungen 22 mit der Druckausgleichskammer 80 verbunden. Die Druckausgleichsbohrungen 22 verlaufen in diesem Beispiel schräg zur Längsmittelachse der Ventileinheit, wobei sie vorzugsweise in Richtung Druckausgleichskammer 80 zur Längsmittelachse hin gerichtet sind. Die Druckausgleichsbohrungen 22 des zweiten Ausführungsbeispiels können jedoch auch wie im ersten Ausführungsbeispiel parallel zur Längsmittelachse des Schaltkolbens verlaufen bzw. die Druckausgleichsbohrungen des ersten Ausführungsbeispiels können ebenfalls wie hier dargestellt schräg verlaufen.

Im Hohlraum des Ventilgehäuses 1 ist der Ventilsitz mit dem inneren und äusseren Ventilsitzring 71, 72 und dem darin angeordneten Dichtelement 70 lagefixiert gehalten. Die Dichtungskante 250 liegt am Ventilsitz 700 an. Der Ventilsitz 700 ist dabei vorzugsweise wesentlich grösser als die Anlagefläche der Dichtungskante 250, so dass auch eine leichte radiale Achsverschiebung des Schaltkolbens 2 immer noch zu einer dichtenden Auflage führt. Das Dichtelement 70 ist zwischen dem inneren und dem äusseren Ventilsitzring 71, 72 eingeklemmt gehalten.

Wie in den Figuren 3 und 4 gut erkennbar ist, sind das erste und das zweite Pilotventil 51, 61 über Pilotbohrungen 50, 60 mit einem ersten bzw. einem zweiten Steuerraum 40, 41 verbunden.

Wie im ersten Ausführungsbeispiel ist der innerhalb des Hohlraums bewegbare Schaltkolben 2 wiederum rotationssymmetrisch, jedoch kleiner ausgebildet. Er weist in diesem zweiten Beispiel einen Grundkörper 26 mit einem H-förmigen Längsschnitt auf, welcher eine obere und einen untere Aufnahmeöffnung bildet.

Der untere Bereich des Grundkörpers 26 erweitert sich wie im ersten Beispiel zu dem nach aussen radial vorstehenden Kolbenring 21. Der Kolbenring 21 weist wiederum die bereits beschriebene Dichtungskrone 25 mit der als Schliessfläche dienenden Dichtungskante 250 auf. Der äussere Durchmesser der Dichtungskante 250 entspricht wiederum dem Führungsdurchmesser der dynamischen Prozessdichtung.

Die untere Aufnahmeöffnung bildet eine erste, nach unten gerichtete Stirnfläche 200 aus. Die obere Aufnahmeöffnung bildet eine zweite, nach oben gerichtete Stirnfläche 240 aus. Diese zwei Stirnflächen 200, 240 bilden die erste und zweite Steuerfläche zur Steuerung der Bewegung des Schaltkolbens 2. Vorzugsweise sind die zwei Steuerflächen gleich gross. Die untere Aufnahmeöffnung des Grundkörpers 26 bildet den ersten Steuerraum 40, die obere Aufnahmeöffnung den zweiten Steuerraum 41.

In die untere Aufnahmeöffnung ragt ein bezüglich des Ventilgehäuses 1 ortsfestes Fusselement 27 hinein. In die obere Aufnahmeöffnung ragt ein bezüglich des Ventilgehäuses 1 ortsfestes Kopfelement 28 hinein. Das Fusselement 27 wie auch das Kopfelement 28 sind von einer axial verlaufenden ersten bzw. zweiten Steuerbohrung 270, 280 durchsetzt, welche in die erste bzw. zweite Pilotbohrung 50, 60 münden, die zum ersten bzw. zweiten Pilotventil 51, 61 führen. Das Fusselement 27 und das Kopfelement 28 sind mit je dem umlaufenden ersten bzw. zweiten elastomeren oder anderweitig geeignet ausgebildeten Dichtungsring 90, 91 versehen, um bei Bewegung des Schaltkolbens 2 die dynamische Steuerdichtung zu bilden.

Die zweite Ausführungsform hat den Vorteil, dass die Lebensdauer der Ventileinheit im Vergleich zum ersten Beispiel länger ist. Die Reproduzierbarkeit der Schaltbewegung ist besser und die Ventileinheit arbeitet somit insgesamt präziser.

In den zwei bisher beschriebenen Ausführungsformen sind der erste und der zweite Steuerraum 40, 41 zylinderförmig ausgebildet und sie weisen keine Unterteilung auf. Zudem ist eine obere und eine untere dynamische Steuerraumdichtung 90, 91 mit gleichen Führungsdurchmessern vorhanden, zwischen welchen die dynamische Prozessdichtung 92 und die Ventildichtung angeordnet ist. Andere Anordnungen sind möglich. Vorzugsweise lassen sich alle hier beschriebenen Ausführungsbeispiele bidirektional betreiben, d.h. der Eingang und der Ausgang lassen sich vertauschen.

Der Führungsdurchmesser der Prozessdichtung 92 ist in den bisherigen Beispielen grösser als derjenige der Steuerraumdichtungen 90, 91, wobei er gleich gross wie der Durchmesser der Dichtkante 250 ist.

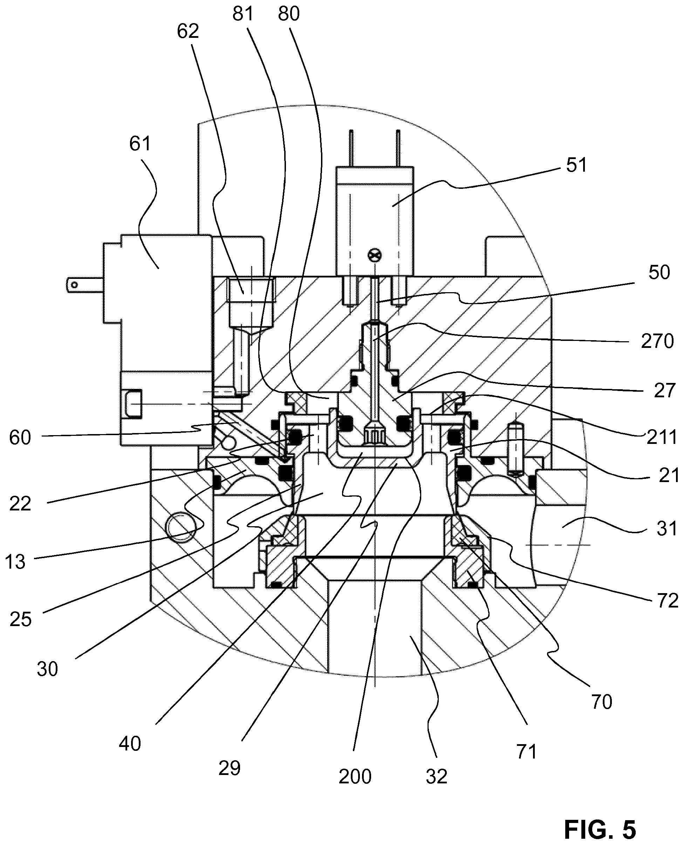

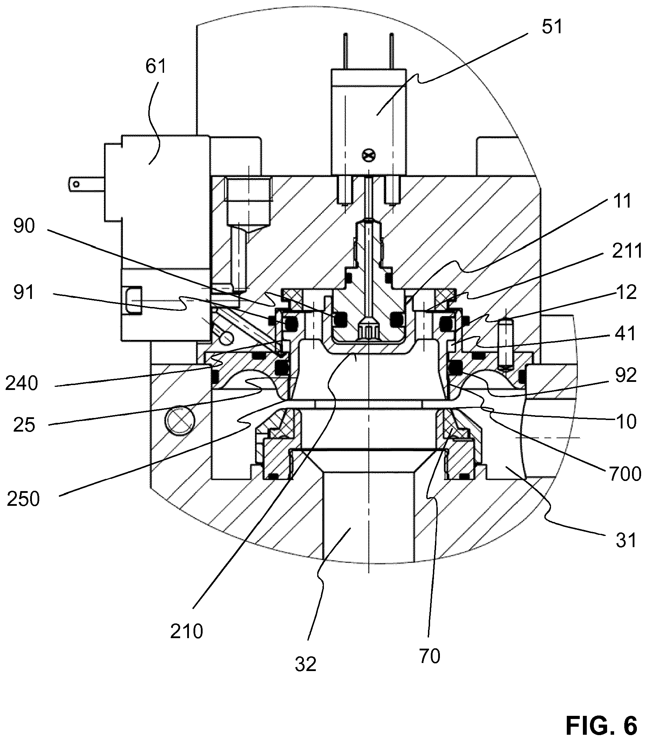

In der Ausführungsform gemäss den Figuren 5 und 6 liegt eine hierzu geänderte Anordnung vor. Diese dritte Ausführungsform ist grundsätzlich ähnlich aufgebaut, so dass gleiche Teile mit gleichen Bezugszeichen nicht im Detail wieder beschrieben werden.

Die Prozessdruck-Eingangsleitung 31 führt im dritten Beispiel durch den Ventilsitz, genauer durch den inneren Ventilsitzring 71, in den Ventilraum 30.

Der Schaltkolben 2 ist wiederum relativ klein ausgebildet. Er besteht aus einem Grundkörper 29 mit einem U-förmigen Längsschnitt, von welchem der Kolbenring 21 radial nach aussen vorsteht. Der Kolbenring 21 weist die Durchgangsbohrungen 22 zur Verbindung des Ventilraums 30 mit der Druckausgleichskammer 80 auf. Die Durchgangsbohrungen 22 sind in diesem Beispiel achsparallel angeordnet. Sie könnten jedoch auch schräg angeordnet sein.

Der Kolbenring 21 geht in die Dichtungskrone 25 mit der ringförmig geschlossenen, umlaufenden Dichtungskante 250 über. Im Bereich der Dichtungskrone 25 weist das Ventilgehäuse 1 ein Einsatzelement in Form eines ortsfesten Dichtungsblocks 13 auf. Der Dichtungsblock 13 weist den dritten Dichtungsring 92 auf, welcher die dynamische Prozessdichtung bildet und welcher die relativ zum Dichtungsblock 13 bewegten Dichtungskrone 25 radial dichtet. Der äussere Durchmesser der Dichtungskante 25 entspricht wiederum dem Führungsdurchmesser dieser dynamischen Prozessdichtung.

Der Kolbenring 21 weist einen leicht grösseren Aussendurchmesser auf als die Dichtungskrone 25.

Der Grundkörper 29 bildet eine nach oben offene Aufnahme, dessen nach oben gerichtete

Grundfläche die erste Stirnfläche 200 und somit die mit Pilotdruck beaufschlagbare Fläche für den ersten Steuerraum 40 bildet. Dieser Steuerraum 40 ist somit nach wie vor zylinderförmig ohne interne Unterbrechungen ausgebildet. Im Ventilgehäuse 1 ist ähnlich wie im zweiten Beispiel das Fusselement 27 ortsfest gehalten und von einer ersten Steuerbohrung 270 durchsetzt, welche in die erste Pilotbohrung 50 mündet und zum ersten Pilotventil 51 führt. Am Fusselement 27 ist der erste Dichtungsring 90 angeordnet, welcher gegenüber der Innenwandung dichtet und die erste dynamische Steuerraumdichtung bildet.

Der zweite Steuerraum 41 ist in diesem Beispiel ringförmig ausgebildet. Er befindet sich im Übergangsbereich des Kolbenrings 21 zur Dichtungskrone 25, wie durch die Zusammenschau der Figuren 5 und 6 erkennbar ist. das Ventilgehäuse 1 bildet hierzu eine entsprechende Ringnut aus.

Die nach unten gerichtete kreisförmige Stirnfläche des Kolbenrings 21 bildet die zweite Steuerfläche 240 der Ventilsteuerung. Vorzugsweise sind die erste und die zweite Steuerfläche 200, 240 wiederum gleich gross ausgebildet. Am Kolbenring 21 ist der zweite Dichtungsring 91 angeordnet, welcher bezüglich einer entsprechenden Wandung des Dichtungsgehäuses dichtet und die zweite dynamische Steuerraumdichtung bildet.

Der Führungsdurchmesser der zweiten dynamischen Steuerraumdichtung ist in diesem dritten Beispiel somit grösser als derjenige der ersten dynamischen Steuerraumdichtung. Der Führungsdurchmesser der dynamischen Prozessdichtung liegt in einem Bereich zwischen diesen zwei Durchmessern, wobei er vorzugsweise lediglich leicht kleiner oder gleich gross ist wie der Führungsdurchmesser der zweiten dynamischen Steuerraumdichtung.

Das Bezugszeichen 62 bezeichnet eine Entlüftungsöffnung 62 zur Entlüftung des zweiten Steuerraums 41.

Die Ventileinheit gemäss dieser Ausführungsform lässt sich äusserst kompakt ausbilden.

Die in den Zeichnungen ebenfalls mit schwarzen Quadraten dargestellten Elemente sind statische Dichtungen zwischen ortsfesten Teilen der Ventileinheit. Sie sind nicht mit eigenen Bezugszeichen versehen.

Die Funktionsweise der Ventileinheiten gemäss dem zweiten und dritten Beispiel ist dieselbe wie im ersten Beispiel und wird deshalb nicht mehr erläutert.

Die erfindungsgemässe Ventileinheit weist, verursacht durch geringe Dichtkräfte, geringe axiale Kräfte auf und ermöglicht dadurch eine hohe Lebensdauer bei einer hohen Anzahl von Schaltzyklen.

**BEZUGSZEICHENLISTE**

| | | | |
|---|---|---|---|
| 1 | Ventilgehäuse | | Längsschnitt |
| 10 | Prozessführungsschaft | | |
| 11 | unterer Steuerungsführungsschaft | 30 31 | Ventilraum Prozessdruck- |
| 12 | oberer Steuerungsführungsschaft | 32 | Eingangsleitung Prozessdruck- |
| 13 | Dichtungsblock | | Ausgangsleitung |
| 2 | Schaltkolben | 40 | erster Steuerraum |
| 20 | Kolbenfuss | 41 | zweiter Steuerraum |
| 200 | erste Stirnfläche | | |
| 21 | Kolbenring | 50 | erste Pilotbohrung |
| 210 | dritte Stirnfläche | 51 | erstes Pilotventil |
| 211 | vierte Stirnfläche | | |
| 212 | Ringnut | 60 | zweite Pilotbohrung |
| 213 | Fläche | 61 | zweites Pilotventil |
| 214 | Fläche | 62 | Entlüftungsöffnung |
| 22 | Druckausgleichsbohrung | | |
| 23 | Kolbenhals | 70 | Dichtelement |
| 24 | Kolbenkopf | 700 | Ventilsitz |
| 240 | zweite Stirnfläche | 71 | innerer Ventilsitzring |
| 25 | Dichtungskrone | 72 | äusserer Ventilsitzring |
| 250 | Dichtungskante | | |
| 26 | Grundkörper mit H-förmigem Längsschnitt | 80 81 | Druckausgleichskammer Anschlagelement |
| 27 | Fusselement | | |
| 270 | erste Steuerbohrung | 90 | erster Dichtungsring |
| 28 | Kopfelement | 91 | zweiter Dichtungsring |
| 280 | zweite Steuerbohrung | 92 | dritter Dichtungsring |
| 29 | Grundkörper mit U-förmigem | | |

## Patentansprüche

1. Ventileinheit zum pneumatischen Schalten in einem Blasformprozess
a) mit einem Ventilgehäuse (1), welches eine Prozessdruck-Eingangsleitung (31), eine Prozessdruck-Ausgangsleitung (32) sowie einen Prozessführungsschaft (10) aufweist,
b) mit einem Schaltkolben (2) zum Verschliessen und Öffnen einer Verbindung zwischen der Prozessdruck-Eingangsleitung (31) und der Prozessdruck-Ausgangsleitung (32), wobei der Schaltkolben (2) eine Längsmittelachse definiert,
sowie
c) mit einer ersten und einer zweiten Steuerleitung (50, 60) und einem ersten und einem zweiten Steuerraum (40, 41) zur Steuerung des Schaltkolbens (2), wobei der Schaltkolben (2) eine erste Steuerfläche (200) aufweist, welche dem ersten Steuerraum (40) zugewandt ist, und wobei der Schaltkolben (2) eine zweite Steuerfläche (240) aufweist, welche dem zweiten Steuerraum (41) zugewandt ist, wobei die zwei Steuerflächen (200, 240) mit je einem Steuerdruck beaufschlagbar sind,
wobei der Schaltkolben (2) mittels einer dynamischen Prozessdichtung gedichtet in axialer Richtung innerhalb des Prozessführungsschaftes (10) verschiebbar ist und
a) wobei der Schaltkolben (2) einen Schliessring aufweist, welcher im geschlossenen Zustand der Verbindung dichtend an einem Ventilsitz (700) des Ventilgehäuses (1) anliegt, oder
**b)** wobei das Ventilgehäuse (1) einen Schliessring aufweist, welcher im geschlossenen Zustand der Verbindung dichtend an einem Ventilsitz des Schaltkolbens (2) anliegt,
und wobei der Schliessring als umlaufende Dichtungskante (250) ausgebildet ist, wobei der Ventilsitz (700) aus einem weicheren und elastischeren Material als die daran anliegende Dichtungskante (250) besteht,
und wobei die umlaufende Dichtungskante (250) einen Durchmesser aufweist, welcher einem Führungsdurchmesser der dynamischen Prozessdichtung entspricht, wobei mindestens einer der zwei Steuerräume (40, 41) zylindrisch ausgebildet ist und zentrisch zur vom Schaltkolben (2) definierten Längsmittelachse, die Längsmittelachse beinhaltend, angeordnet ist und wobei der Schaltkolben (2) Durchgangsbohrungen (22) zur Verbindung eines Ventilraums (30) mit einer Druckausgleichskammer (80) aufweist.

2. Ventileinheit nach Anspruch 1, wobei der Schaltkolben (2) eine Dichtungskrone (25) aufweist, welche keilförmig ausgebildet ist und deren umlaufende Spitze die Dichtungskante (250) bildet.

3. Ventileinheit nach einem der Ansprüche 1 oder 2, wobei der Ventilsitz (700) in einer Ventilsitzringanordnung (71, 72) eingebettet ist, wobei die Ventilsitzringanordnung (71, 72) aus einem härteren Material besteht als der Ventilsitz (700).

4. Ventileinheit nach einem der Ansprüche 1 bis 3, wobei ein ringförmiges Dichtelement (70) vorhanden ist, welches den Ventilsitz (700) aufweist und wobei das Dichtelement (70) die Form eines Kegelstumpfes mit einer sich nach aussen erweiternden Basis aufweist.

5. Ventileinheit nach einem der Ansprüche 1 bis 4, wobei eine erste Wirkfläche (210, 213) und eine zweite Wirkfläche (211, 214) vorhanden sind, welche einander entgegenwirken und welche mit einem Prozessdruck beaufschlagbar sind, und wobei die erste und die zweite Wirkfläche (210, 213; 211, 214) gleich gross sind.

6. Ventileinheit nach einem der Ansprüche 1 bis 5, wobei die Ventileinheit ein erstes Pilotventil (51) und ein zweites Pilotventil (61) aufweist, und wobei der erste Steuerraum (40) über eine erste Pilotbohrung (50) mit dem ersten Pilotventil (51) verbunden ist und wobei der zweite Steuerraum (41) über eine zweite Pilotbohrung (60) mit dem zweiten Pilotventil (61) verbunden ist.

7. Ventileinheit nach einem der Ansprüche 1 bis 6, wobei die erste und zweite Steuerfläche (200, 240) gleich gross sind.

8. Ventileinheit nach einem der Ansprüche 1 bis 7, wobei beide Steuerräume (40, 41) zylindrisch ausgebildet sind und zentrisch zur Längsmittelachse angeordnet sind.

9. Ventileinheit nach einem der Ansprüche 1 bis 8, wobei eine erste und eine zweite dynamische Steuerraumdichtung vorhanden sind und wobei die Führungsdurchmesser dieser zwei dynamischen Steuerraumdichtungen gleich gross sind und zentrisch bezüglich der Längsmittelachse angeordnet sind.

10. Ventileinheit nach einem der Ansprüche 1 bis 9, wobei der Führungsdurchmesser der dynamischen Prozessdichtung grösser als mindestens einer der Führungsdurchmesser der ersten und zweiten Steuerraumdichtung ist, vorzugsweise ist er grösser als beide Führungsdurchmesser der ersten und zweiten Steuerraumdichtung.

11. Ventileinheit nach einem der Ansprüche 1 bis 10,
wobei der Schaltkolben (2) einen Kolbenfuss (20), einen Kolbenkopf (24) und einen Kolbenring (21) aufweist,
wobei der Kolbenring (21) einen grösseren Aussendurchmesser aufweist als der Kolbenfuss (20) und der Kolbenkopf (24),
wobei der Kolbenfuss (20) und der Kolbenkopf (24) denselben Aussendurchmesser aufweisen,
wobei das Ventilgehäuse (1) eine erste zylindrische zentrische Sackbohrung zur Aufnahme des Kolbenfusses (20) und eine zweite zylindrische zentrische Sackbohrung zur Aufnahme des Kolbenkopfes (24) aufweist,
wobei der erste Steuerraum (40) in der ersten Sackbohrung ausgebildet ist und der zweite Steuerraum (41) in der zweiten Sackbohrung ausgebildet ist und
wobei die umlaufende Dichtungskante (250) am Kolbenring (21) ausgebildet ist.

12. Ventileinheit nach einem der Ansprüche 1 bis 10,
wobei der Schaltkolben (2) einen Grundkörper (26) mit einem H-förmigen Längsschnitt und einen Kolbenring (21) aufweist,
wobei der Grundkörper (26) eine nach unten offene erste Aufnahme und eine nach oben offene zweite Aufnahme bildet,
wobei am Ventilgehäuse (1) ein ortsfestes Fusselement (27) und ein ortsfestes Kopfelement (28) ausgebildet sind,
wobei das Fusselement (27) in die erste Aufnahme eingreift und das Kopfelement (28) in die zweite Aufnahme eingreift,
wobei die erste Aufnahme den ersten Steuerraum (40) bildet und die zweite Aufnahme den zweiten Steuerraum (41) bildet und
wobei die umlaufende Dichtkante (250) am Kolbenring (21) ausgebildet ist.

13. Ventileinheit nach einem der Ansprüche 1 bis 10,
wobei der Schaltkolben (2) einen Grundkörper (29) mit eine U-förmigen Längsschnitt und einen Kolbenring (21) aufweist,
wobei der Grundkörper (29) eine nach oben offene erste Aufnahme bildet,
wobei am Ventilgehäuse (1) ein ortsfestes Fusselement (27) ausgebildet ist,
wobei das Fusselement (27) in die erste Aufnahme eingreift, wobei die erste Aufnahme den ersten Steuerraum (40) bildet,
wobei das Ventilgehäuse (1) einen Ringspalt um den Kolbenring (21) bildet,
wobei der Ringspalt den zweiten Steuerraum (40) bildet und
wobei die umlaufende Dichtkante (250) am Kolbenring (21) ausgebildet ist.

## Claims

1. Valve unit for pneumatic operation in a blow-molding process, comprising
a) a valve housing (1) having a process pressure input line (31), a process pressure output line (32) and a process guide shaft (10),
b) an operating piston (2) for closing and opening a connection between the process pressure input line (31) and the process pressure output line (32), wherein the operating piston (2) defines a longitudinal central axis,
and
c) a first and a second control line (50, 60) and a first and a second control chamber (40, 41) for controlling the operating piston (2), wherein the operating piston (2) has a first control surface (200) which faces the first control chamber (40), and wherein the operating piston (2) has a second control surface (240) which faces the second control chamber (41), wherein the two control surfaces (200, 240) are able to be subjected to a control pressure each,
wherein the operating piston (2) can be displaced in the axial direction within the process guide shaft (10) in a sealed manner by means of a dynamic process seal and
a) wherein the operating piston (2) has a closing ring which in the closed state of the connection sealingly abuts a valve seat (700) of the valve housing (1), or
b) wherein the valve housing (1) has a closing ring which in the closed state of the connection sealingly abuts against a valve seat of the operating piston (2),
and wherein the closing ring is designed as a circumferential sealing edge (250), wherein the valve seat (700) consists of a softer and more elastic material than the sealing edge (250) abutting said valve seat,
and
wherein the circumferential sealing edge (250) has a diameter which corresponds to a guide diameter of the dynamic process seal
wherein at least one of the two control chambers (40, 41) is of cylindrical configuration and is arranged centrally to the longitudinal central axis by the operating piston (2), thereby comprising the longitudinal central axis, and
wherein the operating piston (2) has through-bores (22) for connecting a valve chamber (30) to a pressure compensation chamber (80).

2. Valve unit as claimed in claim 1, wherein the operating piston (2) has a sealing cap (25) which is of wedge-shaped configuration and the circumferential tip thereof forms the sealing edge (250).

3. Valve unit as claimed in any one of claims 1 or 2, wherein the valve seat (700) is embedded in a valve seat ring arrangement (71, 72), wherein the valve seat ring arrangement (71, 72) consists of a harder material than the valve seat (700).

4. Valve unit as claimed in any one of claims 1 to 3, wherein an annular sealing element (70) which comprises the valve seat (700) is present and wherein the sealing element (70) has the shape of a truncated cone with an outwardly widening base.

5. Valve unit as claimed in any one of claims 1 to 4, wherein a first active surface (210, 213) and a second active surface (211, 214), which counteract one another and which are able to be subjected to a process pressure, are present and wherein the first and the second active surface (210, 213; 211, 214) are of the same size.

6. Valve unit as claimed in any one of claims 1 to 5, wherein the valve unit comprises a first pilot valve (51) and a second pilot valve (61), and wherein the first control chamber (40) is connected via a first pilot bore (50) to the first pilot valve (51) and wherein the second control chamber (41) is connected via a second pilot bore (60) to the second pilot valve (61).

7. Valve unit as claimed in any one of claims 1 to 6, wherein the first and second control surface (200, 240) are of the same size.

8. Valve unit as claimed in any one of claims 1 to 7, wherein both control chambers (40, 41), are of cylindrical configuration and are arranged centrally to the longitudinal central axis.

9. Valve unit as claimed in any one of claims 1 to 8, wherein a first and a second dynamic control chamber seal are present and wherein the guide diameter of these two dynamic control chamber seals are of the same size and are arranged centrally relative to the longitudinal central axis.

10. Valve unit as claimed in any one of claims 1 to 9, wherein the guide diameter of the dynamic process seal is larger than at least one of the guide diameters of the first and second control chamber seal, preferably the guide diameter of the dynamic process seal is larger than both guide diameters of the first and second control chamber seal.

11. Valve unit as claimed in any one of claims 1 to 10,
wherein the operating piston (2) has a piston foot (20), a piston head (24) and a piston ring (21),
wherein the piston ring (21) has a larger external diameter than the piston foot (20) and the piston head (24),
wherein the piston foot (20) and the piston head (24) have the same external diameter, wherein the valve housing (1) has a first cylindrical central blind bore for receiving the piston foot (20) and a second cylindrical central blind bore for receiving the piston head (24),
wherein the first control chamber (40) is configured in the first blind bore and the second control chamber (41) is configured in the second blind bore
and
wherein the circumferential sealing edge (250) is configured on the piston ring (21).

12. Valve unit as claimed in any one of claims 1 to 10,
wherein the operating piston (2) has a base body (26) with an H-shaped longitudinal section and a piston ring (21),
wherein the base body (26) forms a downwardly open first receiver and an upwardly open second receiver,
wherein a fixed foot element (27) and a fixed head element (28) are configured on the valve housing (1),
wherein the foot element (27) engages in the first receiver and the head element (28) engages in the second receiver,
wherein the first receiver forms the first control chamber (40) and the second receiver forms the second control chamber (41) and
wherein the circumferential sealing edge (250) is configured on the piston ring (21).

13. Valve unit as claimed in any one of claims 1 to 10,
wherein the operating piston (2) has a base body (29) with a U-shaped longitudinal section and a piston ring (21),
wherein the base body (29) forms an upwardly open first receiver,
wherein a fixed foot element (27) is configured on the valve housing (1),
wherein the foot element (27) engages in the first receiver, wherein the first receiver forms the first control chamber (40),
wherein the valve housing (1) forms an annular gap around the piston ring (21),
wherein the annular gap forms the second control chamber (40) and
wherein the circumferential sealing edge (250) is configured on the piston ring (21).

## Revendications

1. Unité de soupape servant à la commutation pneumatique dans un processus de moulage par soufflage
a) comportant un carter de soupape (1), lequel comprend une conduite d'entrée de pression de processus (31), une conduite de sortie de pression de processus (32) ainsi qu'une tige de guidage de processus (10),
b) comportant un piston de commutation (2) servant à la fermeture et à l'ouverture d'une connexion entre la conduite d'entrée de pression de processus (31) et la conduite de sortie de pression de processus (32), le piston de commutation (2) définissant un axe médian longitudinal,
et
c) comportant une première et une deuxième conduite de commande (50, 60) et une première et une deuxième chambre de commande (40, 41) servant à la commande du piston de commutation (2), le piston de commutation (2) comprenant une première surface de commande (200), laquelle est tournée vers la première chambre de commande (40), et le piston de commutation (2) comprenant une deuxième surface de commande (240), laquelle est tournée vers la deuxième chambre de commande (41), les deux surfaces de commande (200, 240) pouvant être soumises respectivement à une pression de commande,
le piston de commutation (2) étant déplaçable dans la direction axiale à l'intérieur de la tige de guidage de processus (10) de manière étanchéifiée au moyen d'un joint d'étanchéité de processus dynamique et
a) le piston de commutation (2) comprenant une bague de fermeture, laquelle s'appuie de manière étanche contre un siège de soupape (700) du carter de soupape (1) dans l'état fermé de la connexion, ou
b) le carter de soupape (1) comprenant une bague de fermeture, laquelle s'appuie de manière étanche contre un siège de soupape du piston de commutation (2) dans l'état fermé de la connexion,
et la bague de fermeture étant réalisée sous la forme d'une arête d'étanchéité périphérique (250), le siège de soupape (700) étant constitué d'une matière plus molle et plus élastique que l'arête d'étanchéité (250) s'appuyant contre celui-ci,
et l'arête d'étanchéité périphérique (250) présentant un diamètre, lequel correspond à un diamètre de guidage du joint d'étanchéité de processus dynamique, au moins l'une des deux chambres de commande (40, 41) étant réalisée de manière cylindrique et étant disposée de manière centrée par rapport à l'axe médian longitudinal défini par le piston de commutation (2), de manière à contenir l'axe médian longitudinal, et le piston de commutation (2) comprenant des alésages traversants (22) servant à la connexion d'une chambre de soupape (30) à une chambre de compensation de pression (80).

2. Unité de soupape selon la revendication 1, le piston de commutation (2) comprenant une couronne d'étanchéité (25) qui est cunéiforme et dont le sommet périphérique forme l'arête d'étanchéité (250).

3. Unité de soupape selon l'une des revendications 1 et 2, le siège de soupape (700) étant encastré dans un ensemble de bagues de siège de soupape (71, 72), l'ensemble de bagues de siège de soupape (71, 72) étant constitué d'une matière plus dure que le siège de soupape (700).

4. Unité de soupape selon l'une des revendications 1 à 3, un élément d'étanchéité annulaire (70) étant présent, lequel comprend le siège d'étanchéité (700), et l'élément d'étanchéité (70) présentant la forme d'un cône tronqué doté d'une base s'élargissant vers l'extérieur.

5. Unité de soupape selon l'une des revendications 1 à 4, une première surface active (210, 213) et une deuxième surface active (211, 214) étant présentes, lesquelles agissent en sens inverse l'une de l'autre et lesquelles peuvent être soumises à une pression de processus, et la première et la deuxième surface active (210, 213 ; 211, 214) étant de même taille.

6. Unité de soupape selon l'une des revendications 1 à 5, l'unité de soupape comprenant une première soupape pilote (51) et une deuxième soupape pilote (61), et la première chambre de commande (40) étant connectée à la première soupape pilote (51) par le biais d'un premier alésage pilote (50) et la deuxième chambre de commande (41) étant connectée à la deuxième soupape pilote (61) par le biais d'un deuxième alésage pilote (60).

7. Unité de soupape selon l'une des revendications 1 à 6, la première et la deuxième surface de commande (200, 240) étant de même taille.

8. Unité de soupape selon l'une des revendications 1 à 7, les deux chambres de commande (40, 41) étant réalisées de manière cylindrique et étant disposées de manière centrée par rapport à l'axe médian longitudinal.

9. Unité de soupape selon l'une des revendications 1 à 8, un premier et un deuxième joint d'étanchéité de chambre de commande dynamique étant présents et les diamètres de guidage de ces deux joints d'étanchéité de chambre de commande dynamiques étant de même taille et étant disposés de manière centrée par rapport à l'axe médian longitudinal.

10. Unité de soupape selon l'une des revendications 1 à 9, le diamètre de guidage du joint d'étanchéité de processus dynamique étant supérieur à au moins l'un des diamètres de guidage du premier et du deuxième joint d'étanchéité de chambre de commande, de préférence étant supérieur aux deux diamètres de guidage du premier et du deuxième joint d'étanchéité de chambre de commande.

11. Unité de soupape selon l'une des revendications 1 à 10,
le piston de commutation (2) comprenant un pied de piston (20), une tête de piston (24) et un segment de piston (21),
le segment de piston (21) présentant un plus grand diamètre extérieur que le pied de piston (20) et la tête de piston (24),
le pied de piston (20) et la tête de piston (24) présentant le même diamètre extérieur, le carter de soupape (1) comportant un premier alésage borgne centré cylindrique servant au logement du pied de piston (20) et un deuxième alésage borgne centré cylindrique servant au logement de la tête de piston (24),
la première chambre de commande (40) étant réalisée dans le premier alésage borgne et la deuxième chambre de commande (41) étant réalisée dans le deuxième alésage borgne et
l'arête d'étanchéité périphérique (250) étant réalisée sur le segment de piston (21).

12. Unité de soupape selon l'une des revendications 1 à 10,
le piston de commutation (2) comprenant un corps de base (26) présentant une section longitudinale en forme de H et un segment de piston (21),
le corps de base (26) formant un premier logement ouvert vers le bas et un deuxième logement ouvert vers le haut,
un élément de pied fixe (27) et un élément de tête fixe (28) étant réalisés sur le carter de soupape (1),
l'élément de pied (27) venant en prise dans le premier logement et l'élément de tête (28) venant en prise dans le deuxième logement,
le premier logement formant la première chambre de commande (40) et le deuxième logement formant la deuxième chambre de commande (41) et
l'arête d'étanchéité périphérique (250) étant réalisée sur le segment de piston (21).

13. Unité de soupape selon l'une des revendications 1 à 10,
le piston de commutation (2) comprenant un corps de base (29) présentant une section longitudinale en forme de U et un segment de piston (21),
le corps de base (29) formant un premier logement ouvert vers le haut,
un élément de pied fixe (27) étant réalisé sur le carter de soupape (1),
l'élément de pied (27) venant en prise dans le premier logement, le premier logement formant la première chambre de commande (40),
le carter de soupape (1) formant une fente annulaire autour du segment de piston (21), la fente annulaire formant la deuxième chambre de commande (40) et
l'arête d'étanchéité périphérique (250) étant réalisée sur le segment de piston (21).
